# EUROPÄISCHE PATENTANMELDUNG

(11) **EP 2 739 011 A1**
(43) Veröffentlichungstag der Anmeldung: **04.06.2014**
(21) Anmeldenummer: 13193593.4
(22) Anmeldetag: 20.11.2013
(51) Int. Cl.: H04L 29/08

(54) **Verfahren zum fahrzeugübergreifenden verteilten Rechnen**

(30) Priorität: 28.11.2012 DE 102012221729
(71) Anmelder: ROBERT BOSCH GMBH, 70442 Stuttgart (DE)
(72) Erfinder: El Bezi, Oliver, 71404 Korb (DE); Menzel, Igor, 70435 Stuttgart (DE); Ebert, Dominik, 31134 Hildesheim (DE)

(57) **Zusammenfassung**

Die Erfindung betrifft einen Verbund (100) aus Kraftfahrzeugrecheneinheiten (121, 122, 123, 124, 125, 131, 132, 133, 134, 135) in unterschiedlichen Kraftfahrzeugen (120, 130) zur Verarbeitung von Rechenaufgaben, aufweisend eine oder mehrere Kraftfahrzeugrecheneinheiten (122, 123, 124, 125) in einem ersten Kraftfahrzeug (120), eine oder mehrere Kraftfahrzeugrecheneinheiten (132, 133, 134, 135) in einem zweiten Kraftfahrzeug (130) und wenigstens eine Leitstelleneinheit (110), die dazu eingerichtet ist, eine erste Rechenaufgabe an eine der einen oder mehreren Kraftfahrzeugrecheneinheiten (122, 123, 124, 125) in dem ersten Kraftfahrzeug (120) und eine zweite Rechenaufgabe an eine der einen oder mehreren Kraftfahrzeugrecheneinheiten (132, 133, 134, 135) in dem zweiten Kraftfahrzeug (130) zu übermitteln, wobei die eine der einen oder mehreren Kraftfahrzeugrecheneinheiten (122, 123, 124, 125) in dem ersten Kraftfahrzeug (120) dazu eingerichtet ist, die erste Rechenaufgabe zu verarbeiten, und wobei die eine der einen oder mehreren Kraftfahrzeugrecheneinheiten (132, 133, 134, 135) in dem zweiten Kraftfahrzeug (130) dazu eingerichtet ist, die zweite Rechenaufgabe zu verarbeiten.

## Beschreibung

Die vorliegende Erfindung betrifft einen Verbund aus Kraftfahrzeugrecheneinheiten in unterschiedlichen Kraftfahrzeugen zur Verarbeitung von Rechenaufgaben und ein zugehöriges Verfahren.

### Stand der Technik

In modernen Kraftfahrzeugen sind zahlreiche Recheneinheiten (sog. Steuergeräte) verbaut. Diese dienen der Steuerung und dem Betrieb von Antrieb (z.B. Motorsteuerung, ABS, ESP, ...), Komfortsystemen (z.B. Fensterheber, Zentralver-riegelung, Klimatisierung, ...), Infotainmentsystemen (z.B. Navigation, Radio, TV, ...) usw. Somit verfügen Kraftfahrzeuge bereits heute über zahlreiche Komponenten, die Rechenkapazität zur Verfügung stellen.

Es ist wünschenswert, die vorhandene Rechenkapazität besser zu nutzen.

### Offenbarung der Erfindung

Erfindungsgemäß werden ein Verbund aus Kraftfahrzeugrecheneinheiten in unterschiedlichen Kraftfahrzeugen zur Verarbeitung von Rechenaufgaben und ein zugehöriges Verfahren mit den Merkmalen der unabhängigen Patentansprüche vorgeschlagen. Vorteilhafte Ausgestaltungen sind Gegenstand der Unteransprüche sowie der nachfolgenden Beschreibung.

### Vorteile der Erfindung

Im Rahmen der Erfindung wird ein fahrzeugübergreifendes verteiltes Rechnen vorgestellt, um somit die in Fahrzeugen vorhandenen Rechenkapazitäten besser zu nutzen, insbesondere auch für fahrzeugfremde Aufgaben.

Verteiltes Rechnen (auch bekannt als "distributed computing" oder "grid computing") an sich ist auf dem Gebiet der Computernetzwerke bekannt. Dieses Konzept wird nun im Rahmen der Erfindung nicht nur auf das Gebiet der Fahrzeug-Steuergeräte übertragen, was bereits zu besonderen Vorteilen führt, sondern darüber hinaus fahrzeugübergreifend eingesetzt. Zu diesem Zweck wird eine Kommunikation nicht nur zwischen Steuergeräten eines Fahrzeugs, sondern zwischen Fahrzeugen untereinander und/oder zwischen Fahrzeug und einer Leitstelleneinheit vorgeschlagen.

Die Koordination von Steuergeräten eines Fahrzeugs kann über Bussysteme, wie z.B. CAN-Bus, erfolgen. Der Botschaftsaustausch kann standardisiert erfolgen, z.B. gemäß "AUTomotive Open System ARchitecture" (AUTOSAR). Dadurch ist gewährleistet, dass jedes Steuergerät im Fahrzeug, unabhängig von Typ und Hersteller, die Botschaften auch verarbeiten kann. Eine Steuergerätekommunikation kann dabei beispielsweise über eine Master-Slave-Funktion realisiert werden, wobei ein Master-Steuergerät eine Botschaft an ein Slave-Steuergerät sendet. Dieses führt daraufhin eine Operation durch und meldet das Ergebnis an das Master-Steuergerät zurück. Es kann vorgesehen sein, dass ein Slave-Steuergerät von dem Master-Steuergerät zuvor über ein "Wake-Up"-Signal aktiviert wird. Anschließend können die auszuführenden Rechenaufgaben in Form von Bus-Botschaften an das Steuergerät gesendet. Herkömmlicherweise werden die Steuergeräte in Fahrzeugen jedoch nicht fahrzeugübergreifend und nur für fahrzeugeigene Funktionen verwendet.

Die Erfindung ermöglicht, brach liegende Rechenkapazitäten (z.B. bei Fahrzeugstillstand oder Nichtnutzung (z.B. Navigationssystem bei Fahrt ohne Navigation)) in Fahrzeugsteuergeräten zu nutzen und somit beispielsweise die Anschaffung zusätzlicher Recheneinheiten zu vermeiden. Die Erfindung entfaltet besondere Vorteile in Fällen, in denen viele Steuergeräte eingesetzt werden können. Dies trifft beispielsweise auf Unternehmen mit großem Fahrzeugbestand zu (z.B. An-bieter von Mobilitätslösungen (z.B. Car Sharing, Taxiflotten, Fahrzeugvermietung, Speditionen), Firmen mit eigenem Fuhrpark, aber auch Fahrzeughersteller und Zulieferer). Mittels der Erfindung kann die brachliegende Rechenkapazität wirtschaftlich genutzt werden. Die ausgeführten Aufgaben können fahrzeugfremd sein. Jedoch ist auch eine Ausführung fahrzeugeigener Aufgaben möglich. Hier bieten sich insbesondere seltene, aber rechenintensive Aufgaben an, insbesondere wenn für diese Aufgaben kein Verbau zusätzlicher Komponenten wirtschaftlich ist.

Die Erfindung ist auch besonders vorteilhaft für Elektrofahrzeuge, die regelmäßig aufgeladen werden müssen und dabei regelmäßig einige Zeit nicht bewegt werden. Die Ladestationen können besonders einfach mit drahtlosen oder drahtgebundenen Kommunikationssystemen ausgerüstet werden. Vorteilhafterweise kann das Ladekabel mit einem drahtgebundenen Kommunikationssystem verknüpft werden.

Allgemein können auch alle Arten von Parkplätzen, z.B. eine heimische Garage, Parkhäuser usw., besonders einfach mit drahtlosen oder drahtgebundenen Kommunikationssystemen ausgerüstet werden, wobei wegen der kurzen Reichweite auf besonders günstige Bauteile (wie z.B. herkömmliche WLAN-Router) zurückgegriffen werden kann.

Vorzugsweise erfolgt die Nutzung der brach liegenden Rechenkapazität nur dann, wenn eine hinreichende Stromversorgung sichergestellt ist, z.B. während der Fahrt oder im Fall von Elektroautos, wenn sie an eine Ladestation angedockt sind, um zu verhindern, dass sich die Batterie des Fahrzeugs durch die Nutzung der Rechenkapazität zu stark entlädt. Auch kann die Nutzung von einem Ladestand (SoC, State of Charge) der Kraftfahrzeugbatterie abhängig gemacht werden.

Eine erfindungsgemäße Recheneinheit ist, insbesondere programmtechnisch, dazu eingerichtet, die auf der Kraftfahrzeugrecheneinheit, die auf der Leitstelleneinheit oder die auf der Gegenstelleneinheit ablaufenden Verfahrensschritte eines erfindungsgemäßen Verfahrens durchzuführen.

Auch die Implementierung dieser Verfahrensschritte in Form von Software ist vorteilhaft, da dies besonders geringe Kosten verursacht, insbesondere da ein ausführendes Steuergerät noch für weitere Aufgaben genutzt wird und daher ohnehin vorhanden ist. Geeignete Datenträger zur Bereitstellung des Computerprogramms sind insbesondere Disketten, Festplatten, Flash-Speicher, EEPROMs, CD-ROMs, DVDs u.a.m. Auch ein Download eines Programms über Computernetze (Internet, Intranet usw.) ist möglich.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im Folgenden unter Bezugnahme auf die Zeichnung ausführlich beschrieben.

### Kurze Beschreibung der Zeichnungen

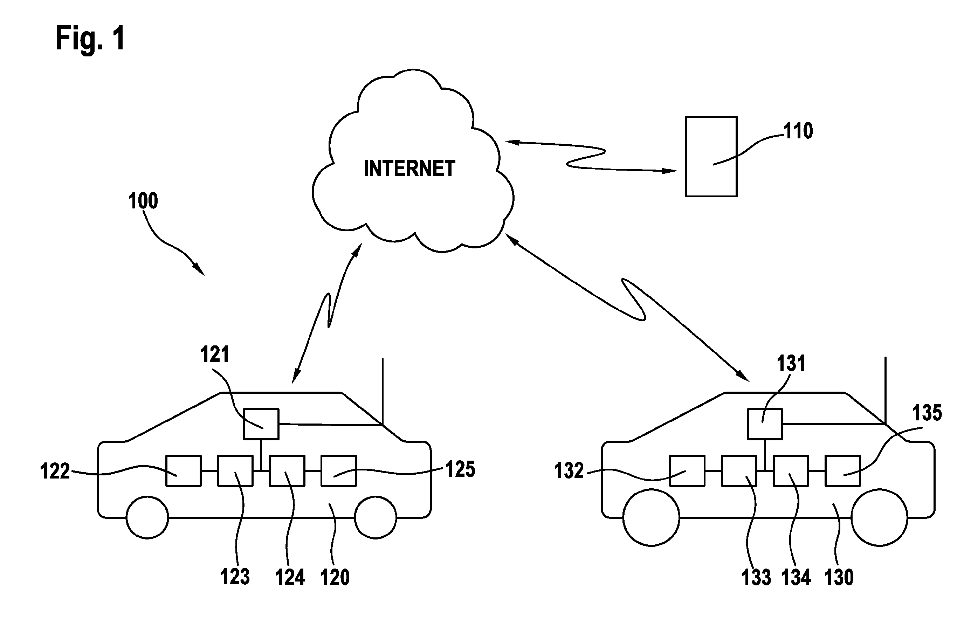

Figur 1 zeigt eine Ausführungsform eines erfindungsgemäßen Kraftfahrzeugrecheneinheitenverbunds.

### Ausführungsform(en) der Erfindung

In Figur 1 ist eine bevorzugte Ausführungsform eines erfindungsgemäßen Kraftfahrzeugrecheneinheitenverbunds schematisch dargestellt und mit 100 bezeichnet. Der Kraftfahrzeugrecheneinheitenverbund 100 verfügt über eine hier als Koordinationsserver 110 ausgebildete Leitstelleneinheit. Der Koordinationsserver 110 kommuniziert über eine drahtlose Verbindung, bspw. UMTS, LTE, GPRS, WLAN o.ä., mit einer Anzahl von Kraftfahrzeugen 120, 130, ... bzw. genauer mit einer entsprechenden Gegenstelleneinheit 121, 131, ... in jedem der Kraftfahrzeuge. Die Kommunikationsverbindung wird zweckmäßigerweise über das Internet hergestellt. Dazu stellen sowohl die Gegenstelleneinheiten eine Kommunikationsverbindung mit dem Internet als auch der Kommunikationsserver eine Kommunikationsverbindung mit dem Internet her.

Für die Kommunikationsverbindung mit dem Internet sind alle herkömmlichen Verbindungstypen geeignet, insbesondere UMTS, LTE, GPRS, WLAN, DSL, USB, Ethernet usw. In Figur 1 können beispielsweise die Gegenstelleneinheiten über UMTS und der Koordinationsserver über DSL jeweils eine Internetverbindung aufbauen. Diese Variante eignet sich besonders für die Nutzung von Steuergeräten während der Fahrt. Die Gegenstelleneinheit verfügt dann über eine Antenne zur Kommunikation oder ist mit einer Antenne des Kraftfahrzeugs verbunden.

Eine andere Alternative, die sich besonders für die Nutzung von Steuergeräten in parkenden Kraftfahrzeugen eignet, kommt grundsätzlich ohne Internetverbindung aus. Hier kann eine drahtgebundene (z.B. Ethernet, USB usw.) oder auch drahtlose (z.B. WLAN) Verbindung zwischen den Gegenstelleneinheiten und der Leitstelleneinheit vorgesehen sein.

In beiden Fällen kann die Verbindung mit einem Internetprotokoll (IP) arbeiten.

In Figur 1 ist dargestellt, dass jede Gegenstelleneinheit eine eigene Recheneinheit ist. Ebenso kann eine Gegenstelleneinheit jedoch auch Bestandteil einer anderen Kraftfahrzeugrecheneinheit (im Folgenden als Steuergerät bezeichnet) sein.

Jedes Kraftfahrzeug 120, 130, ... weist mehrere Steuergeräte 122, 123, 124, 125, 132, 133, 134, 135, ... auf, die innerhalb des Fahrzeugs mit der zugehörigen Gegenstelleneinheit 121 bzw. 131 über einen Fahrzeugbus, wie z.B. CAN, AUTOSAR oder FlexRay, verbunden sind. Die Steuergeräte dienen im Kraftfahrzeug zur Steuerung und zum Betrieb von Antrieb (z.B. Motorsteuerung, ABS, ESP, ...), Komfortsystemen (z.B. Fensterheber, Zentralverriegelung, Klimatisierung, ...), Infotainmentsystemen (z.B. Navigation, Radio, TV, ...) usw.

Der Koordinationsserver 110 ist dazu eingerichtet, mit den Gegenstelleneinheiten zu kommunizieren und diesen zu verarbeitende Rechenaufgaben zu übermitteln. Es kann sich dabei um Teilrechenaufgaben einer Gesamtrechenaufgabe oder auch um unabhängige Rechenaufgaben handeln. Wesentlich ist, dass im Rahmen der Erfindung Rechenkapazitäten von Kraftfahrzeugsteuergeräten fahrzeugübergreifend genutzt werden.

Die Steuergeräte 122, 123, 124, 125, 132, 133, 134, 135, ... sind mit entsprechendem Programmcode ausgerüstet, der das Verarbeiten der übermittelten Rechenaufgaben ermöglicht. Es kann sich dabei beispielsweise um einen Hypervisor handeln, wobei in diesem Fall die Rechenanwendung nicht direkt auf dem Steuergerätebetriebssystem, sondern einem davon unabhängigen Betriebssystem, welches vom Recheneinheitenverbund benötigt wird, läuft. Alternativ übernimmt eine Komponente auf den Steuergeräten (z.B. eine AUTOSAR-Komponente) das Lösen der Rechenaufgabe, die vom Koordinationsserver zur Verfügung gestellt wurde.

## Patentansprüche

1. Verbund (100) aus Kraftfahrzeugrecheneinheiten (121, 122, 123, 124, 125, 131, 132, 133, 134, 135) in unterschiedlichen Kraftfahrzeugen (120, 130) zur Verarbeitung von Rechenaufgaben, aufweisend
eine oder mehrere Kraftfahrzeugrecheneinheiten (122, 123, 124, 125) in einem ersten Kraftfahrzeug (120), eine oder mehrere Kraftfahrzeugrecheneinheiten (132, 133, 134, 135) in einem zweiten Kraftfahrzeug (130) und wenigstens eine Leitstelleneinheit (110), die dazu eingerichtet ist, eine erste Rechenaufgabe an eine der einen oder mehreren Kraftfahrzeugrecheneinheiten (122, 123, 124, 125) in dem ersten Kraftfahrzeug (120) und eine zweite Rechenaufgabe an eine der einen oder mehreren Kraftfahrzeugrecheneinheiten (132, 133, 134, 135) in dem zweiten Kraftfahrzeug (130) zu übermitteln,
wobei die eine der einen oder mehreren Kraftfahrzeugrecheneinheiten (122, 123, 124, 125) in dem ersten Kraftfahrzeug (120) dazu eingerichtet ist, die erste Rechenaufgabe zu verarbeiten, und
wobei die eine der einen oder mehreren Kraftfahrzeugrecheneinheiten (132, 133, 134, 135) in dem zweiten Kraftfahrzeug (130) dazu eingerichtet ist, die zweite Rechenaufgabe zu verarbeiten.

2. Verbund gemäß Anspruch 1, weiter aufweisend eine Gegenstelleneinheit (121, 131) in wenigstens einem von dem ersten und zweiten Kraftfahrzeug (120, 130), die mit der einen oder den mehreren Kraftfahrzeugrecheneinheiten (122, 123, 124, 125, 132, 133, 134, 135) über eine Kraftfahrzeugkommunikationsverbindung, insbesondere einen Kraftfahrzeugbus, verbunden und dazu eingerichtet ist, eine drahtlose und/oder drahtgebundene Kommunikationsverbindung mit der Leitstelleneinheit (110) zu unterhalten.

3. Verbund gemäß Anspruch 2, wobei die Gegenstelleneinheit (121, 132) dazu eingerichtet ist, die drahtlose und/oder drahtgebundene Kommunikationsverbindung mit der Leitstelleneinheit (110) während der Fahrt und/oder im Stillstand des Kraftfahrzeugs zu unterhalten.

4. Verbund gemäß Anspruch 2 oder 3, wobei die Gegenstelleneinheit (121, 132) und die Leitstelleneinheit (110) dazu eingerichtet sind, die drahtlose und/oder drahtgebundene Kommunikationsverbindung über das Internet zu unterhalten.

5. Verbund gemäß Anspruch 2, 3 oder 4, wobei die Gegenstelleneinheit (121, 132) dazu eingerichtet ist, von der Leitstelleneinheit (110) empfangene Rechenaufgaben an die mit ihr verbundenen Kraftfahrzeugrecheneinheiten (122, 123, 124, 125, 132, 133, 134, 135) zu übermitteln.

6. Verbund gemäß einem der Ansprüche 2 bis 5, wobei die Gegenstelleneinheit (121, 132) dazu eingerichtet ist, von mit ihr verbundenen Kraftfahrzeugrecheneinheiten (122, 123, 124, 125, 132, 133, 134, 135) empfangene Ergebnisse an die Leitstelleneinheit (110) zu übermitteln.

7. Verbund gemäß Anspruch 6, wobei die Leitstelleneinheit (110) dazu eingerichtet ist, nach dem Empfang eines Ergebnisses von der Gegenstelleneinheit (121, 132) eine weitere Rechenaufgabe an die Gegenstelleneinheit (121, 132) zu übermitteln.

8. Verbund gemäß einem der Ansprüche 2 bis 7, wobei die Gegenstelleneinheit (121, 131) Bestandteil einer der einen oder mehreren Kraftfahrzeugrecheneinheiten (122, 123, 124, 125, 132, 133, 134, 135) oder ein davon separates Gerät ist.

9. Verbund gemäß einem der vorstehenden Ansprüche, wobei die eine der einen oder mehreren Kraftfahrzeugrecheneinheiten (122, 123, 124, 125) in dem ersten Kraftfahrzeug (120) und/oder die eine der einen oder mehreren Kraftfahrzeugrecheneinheiten (132, 133, 134, 135) in dem zweiten Kraftfahrzeug (130) dazu eingerichtet ist, die Rechenaufgabe nur zu verarbeiten, wenn eine Stromversorgung als hinreichend bewertet wird.

10. Verbund gemäß einem der vorstehenden Ansprüche, wobei die Leitstelleneinheit (110) nicht in einem Kraftfahrzeug angeordnet ist.

11. Verfahren zur Verarbeitung von Rechenaufgaben in einem Verbund (100) aus wenigstens zwei Kraftfahrzeugrecheneinheiten (121, 122, 123, 124, 125, 131, 132, 133, 134, 135) in unterschiedlichen Kraftfahrzeugen (120, 130), wobei von jeder der wenigstens zwei Kraftfahrzeugrecheneinheiten (121, 122, 123, 124, 125, 131, 132, 133, 134, 135) eine Rechenaufgabe verarbeitet und ein Ergebnis der Rechenaufgabe an eine Leitstelleneinheit (110) übermittelt wird.

12. Verfahren gemäß Anspruch 11, das in einem Verbund gemäß einem der Ansprüche 1 bis 10 durchgeführt wird.

13. Recheneinheit, die dazu eingerichtet ist, die auf der Kraftfahrzeugrecheneinheit (132, 133, 134, 135), die auf der Leitstelleneinheit (110) oder die auf der Gegenstelleneinheit (121, 131) ablaufenden Verfahrensschritte eines Verfahrens nach einem der Ansprüche 11 oder 12 durchzuführen.

14. Computerprogramm mit Programmcodemitteln, die eine Recheneinheit veranlassen, die auf der Kraftfahrzeugrecheneinheit (132, 133, 134, 135), die auf der Leitstelleneinheit (110) oder die auf der Gegenstelleneinheit (121, 131) ablaufenden Verfahrensschritte eines Verfahrens nach einem der Ansprüche 11 oder 12 durchzuführen, wenn sie auf der Recheneinheit, insbesondere nach Anspruch 13, ausgeführt werden.

15. Maschinenlesbares Speichermedium mit einem darauf gespeicherten Computerprogramm nach Anspruch 14.
